# EUROPEAN PATENT APPLICATION

(11) **EP 3 242 488 A1**
(43) Date of publication of application: **08.11.2017**
(21) Application number: 16305517.1
(22) Date of filing: 04.05.2016
(51) Int. Cl.: H04N 21/262, H04N 21/426, H04N 21/435, H04N 21/4623, H04N 21/81

(54) **METHOD FOR DECRYPTING ADAPTIVE BIT RATE STREAMS AND CORRESPONDING DEVICE**

(71) Applicant: Thomson Licensing, 92130 Issy-les-Moulineaux (FR)
(72) Inventor: LE GARJAN, Bruno, 35576 Cesson-Sévigné Cedex (FR); LE MOAL, Pascal, 35576 Cesson-Sévigné Cedex (FR); SUBRAMANIAN, Senthilnathan, 560102 Bengalore (IN); DEBOMY, Nicolas, 35576 Cesson-Sévigné Cedex (FR)
(74) Representative: Huchet, Anne

(57) **Abstract**

A request for retrieving a manifest file comprising a list of encrypted audio/video chunks and associated key paths for retrieving decryption keys for decrypting the encrypted audio/video chunks is transmitted. A manifest file is received and the associated key paths are transmitted to a secure control access process. The secure access process retrieves decryption keys corresponding to the associated key paths from a server and transmits the decryption keys to a hardware decryption function that stores the decryption keys and that returns handles to the stored decryption keys. The key paths in the manifest file are replaced by the handles. Finally, the manifest file is transferred to the hardware decryption function, which decrypts the encrypted audio/video chunks based on the handles in the manifest file and the stored decryption keys.

## Description

### FIELD

The present disclosure generally relates to the field of adaptive bit rate streaming, and in particular to the decryption and decoding of encrypted adaptive bit rate audio/video streams.

### BACKGROUND

Digital rights management is a set of access control technologies including copy protection technologies, which are used with the intent to control the use of digital content and devices. In digital television broadcast and broadband technology, the use of digital rights management (DRM) is widely spread and highly accepted. In Advanced Television Systems Committee (ATSC), Digital Video Broadcasting (DVB) and Association of Radio Industries and Business (ARIB) standards for example, so-called Conditional Access system (CA) standards are defined in specification documents. According to these standards DRM protected digital streams are encrypted or 'scrambled' and can only be decrypted or descrambled by a receiver device comprising a specific smart card of a subscriber to a digital television offer. A DRM protected digital television stream is encrypted with a key that is referred to as the control word or Entitlement Control Message (ECM). This key is changed frequently, which strengthens the ciphering process as the frequent change is an additional security. To decrypt or 'unscramble' the stream the receiver device must have the control word. Control words are comprised in the digital television stream in encrypted form. To decrypt the control word, the receiver's CA system must receive a decryption enablement message known as Entitlement Management Message (EMM). EMMs are inserted into the digital television stream and are specific to a particular subscriber that is identified by the subscriber's smart card when inserted in the receiver's smart card interface. The smart card is identified by a number that is unique for the operator or service provider.

Wired and wireless networks supporting data transmission using the Internet Protocol (IP) are ubiquitous. Consequently, network providers and server/receiver device manufacturers have sought to solve the problems of delivery of real-time multimedia content (video, radio, TV, etc.) over IP networks to receiver devices. While very effective for data transmission, IP is not well suited for real-time transmission of multimedia content streams. In addition, reception conditions for wireless receiver devices may vary when the receiver device is moved from one location to another. The main difficulty is then to ensure delivery of constant quality high bit rate real-time multimedia content streams to the receiver devices. Adaptive bit rate streaming solutions were developed that work through more or less real-time detection of bandwidth available at the receiver device end, and adjusting the multimedia content stream quality accordingly. It requires the use of a streaming source that can provide a same multimedia content stream in different bit rates. While in the past streaming protocols used the Real-time Transport Protocol (RTP) and Real-Time Streaming Protocol (RTSP), today's adaptive streaming technologies are mainly based on the HyperText Transfer Protocol (HTTP). HTTP-based streaming technology enables the use of existing (HTTP) web server infrastructures for delivery of world wide web content and HTTP packets and since only standard HTTP transactions are used, there are no difficulties for traversing firewall and Network Address Translation (NAT) devices, unlike UDP based protocols such as RTSP. Adaptive streaming allows devices like Internet-connected televisions, TV set-top boxes, smartphones, tablets etc., to consume multimedia content streams (video, TV, radio, etc.) delivered via the Internet and to cope with variable receiving conditions. Several Http Adaptive bit rate Streaming (HAS) solutions were standardized such as such as HTTP Live Streaming (HLS), Moving Pictures Expert Group - Dynamic Adaptive Streaming over HyperText Transfer Protocol (MPEG-DASH), SmoothStreaming from Microsoft Inc.. Adaptive bit rate streaming works by breaking multimedia content streams into a sequence of smaller chunks, each chunk containing a short interval of playback time of a multimedia content stream that is potentially many hours in duration such as a movie or a live broadcast event. A multimedia content stream is made available at a variety of different bit rates, i.e., in the form of alternative chunks encoded at different bit rates covering aligned short intervals of play back time. While the multimedia content stream is being played back by an adaptive bit rate streaming capable receiver device, the receiver device automatically selects from the alternatives the next chunk to download and to play back based on current network conditions. The receiver device selects the chunk with the highest bit rate possible that can be downloaded in time for play back without causing stalls or re-buffering events in the playback. Thus, the adaptive bit rate streaming receiver device can seamlessly adapt to changing network conditions, and provide a play back user experience with fewer stalls or re-buffering events than a non-adaptive bit rate streaming receiver device when reception conditions vary (source, partly: wikipedia). To propose a choice of chunks per bit rate, a so-called manifest file is received by the receiver device which comprises resource locators such as Uniform Resource Locators (URLs) pointing to the different chunks. Typically, a manifest file comprises a list of chunks for different reception profiles corresponding to various reception bandwidths. The variant manifest files are dynamically updated by the server and thus the client devices need to periodically retrieve the files. The adaptive streaming receiver device chooses a profile according to the reception conditions it encounters, e.g., good, mean or bad, with corresponding profiles e.g., high, mean, and low. In the manifest file, the URLs for the high profile point to high bit rate chunks for high quality, high bandwidth reception, while the URLs for the low profile point to low bit rate chunks for low quality, low bandwidth reception. As mentioned, each chunk has a short duration. The duration depends on the environment, e.g., fixed access versus mobile, and desired quality. While short chunks enable quick adaptation to varying bandwidth conditions, longer chunks improve encoding efficiency. This is because for seamless switching between different quality chunks each chunk starts with an I-frame, which leads to a decreased encoding efficiency for short chunks. As an example, Microsoft's Smooth Streaming uses two second segments, while Apple HTTP streaming uses ten second segments. For encrypted chunks in HLS, the manifest file comprises a key path, valid for obtaining a software key over a secured connection for a duration of one or more chunks. In MPEG-DASH and Smooth Streaming, the protection implementation may also need access to a server. Keys may or may not change per profile and are renewed per set of chunks. Added to the above mentioned relatively short duration of the chunks, key changes may occur much more frequently than for previously discussed traditional broadcast. Quick reaction is also required in the case of manifest file upgrade. Consequently, less time is available to pass decryption keys to decryption logic in time. This may require the use of high performance generic processing resources. From a cost vs. performance perspective, it is desirable to perform very specific, computing intensive and repetitive tasks in dedicated hardware instead of in generic hardware. This allows the generic hardware to be freed of those tasks, making the generic hardware available for other purposes and finally enables to use cost-efficient components for the generic hardware.

There is thus a need for improvement of decryption of adaptive bit rate streams.

### SUMMARY

The present disclosure aims at alleviating at least some of the deficiencies discussed in the background section.

In the following, the term "chunk" is a unit of audio/video data smaller than the full duration or length of an audio/video content. The term applies equally to segment, fragment, etc. (as described by a given protocol) - partial audio/video data units derived from a longer piece of content.

As evoked in the background section, the use of high performance generic processing resources remains problematic because of its relative cost-inefficiency.
Software decryption of encrypted multimedia content streams requires the use of a significant part of generic processing resources. Manufacturers of receiver devices try to optimize the manufacturing costs and including high performance generic processing resources in a receiver device is costly. Cost-effective dedicated hardware decryption components exist that can relieve the generic processing resource from the decryption task, as in analogy with dedicated graphics processors used for executing complex graphics computations.
DRM solution providers such as Nagravision, Viaccess, Cisco, Mediaguard and Verimatrix commercialize software libraries for secure decryption key acquisition and for software decryption. For security reasons, these software libraries run in processes that are secured from other processes running in the receiver device. For the same security reasons it is discouraged to transmit decryption keys to processes not running in the secured environment. It is thus a challenge to achieve hardware decryption while respecting security aspects.

To this end, the present principles comprise a method for decryption of an adaptive bit rate audio/video stream, the method being implemented by a receiver device. The method comprises transmitting a request for retrieving a manifest file, the manifest file comprising a list of encrypted audio/video chunks and associated key paths for retrieving decryption keys for decrypting the encrypted audio/video chunks; receiving the manifest file, and transmitting the associated key paths to a secure control access process; the secure control access process retrieving decryption keys corresponding to the associated key paths from a distant server, transmitting the decryption keys to a hardware decryption function that stores the retrieved decryption keys and that returns corresponding handles to the stored decryption keys for hardware decryption of the encrypted audio/video chunks; replacing the associated key paths in the manifest file by the corresponding handles; and transferring the manifest file to the hardware decryption function, the hardware decryption function decrypting the encrypted audio/video chunks based on the decryption keys stored by the hardware decryption function and retrieved by the hardware decryption function based on the corresponding handles.

According to a variant embodiment of the method, the method further comprises a transmission of the manifest file to the secure access process; and retrieving the manifest file from the secure access process wherein the associated key paths are replaced by the corresponding handles to the hardware decryption keys.

The present disclosure also relates to a device for decrypting adaptive bit rate streams, the device comprising a manifest interceptor, configured to transmit a request for retrieving a manifest file, the manifest file comprising a list of encrypted audio/video chunks and associated key paths for retrieving decryption keys for decrypting the encrypted audio/video chunks; the manifest file interceptor being further configured to receive the manifest file, and to transmit the associated key paths to a control access plugin; the control access plugin being further configured to retrieve decryption keys corresponding to the associated key paths from a distant server, to transmit the decryption keys to a hardware decryption function that stores the retrieved decryption keys and that returns corresponding handles to the stored decryption keys for hardware decryption of the encrypted audio/video chunks; the manifest interceptor being further configured to replace the associated key paths in the manifest file by the corresponding handles; a demultiplexer and a play pump configured to transfer the manifest file to the hardware decryption function, the hardware decryption function being further configured to decrypt the encrypted audio/video chunks based on the decryption keys stored by the hardware decryption function and retrieved by the hardware decryption function based on the corresponding handles.

According to a variant embodiment of the device, the manifest interceptor is comprised in a manifest retriever.

According to a variant embodiment of the device, the manifest interceptor is comprised in the demultiplexer.

According to a variant embodiment of the device, the decryption function is configured to store the decrypted audio/video chunks in direct access memory for retrieval by the play pump.

### BRIEF DESCRIPTION OF THE DRAWINGS

More advantages of the present disclosure will appear through the description of particular, non-restricting embodiments. In order to describe the manner in which the advantages of the present disclosure can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring the disclosure.

The exemplary embodiments will be described with reference to the following figures:
**Figure 1** is a prior art adaptive bit rate streaming receiver device.
**Figure 2** is an embodiment of an adaptive bit rate streaming receiver device according to the present principles.
**Figure 3** is a flow chart according to a particular embodiment of the present principles.

### DETAILED DESCRIPTION

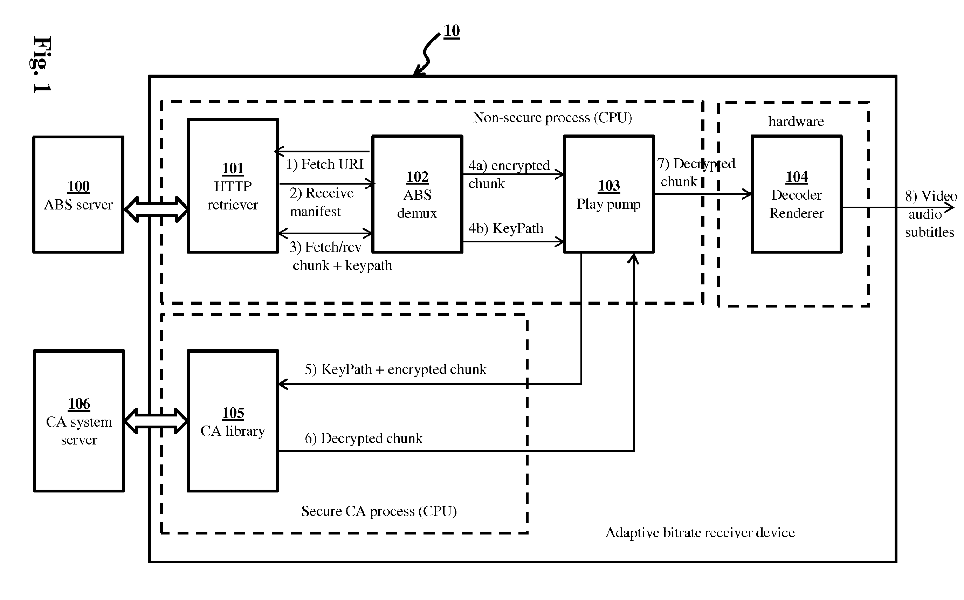

**Figure 1** is an adaptive bit rate streaming receiver device **10.** Receiver device **10** is for example a Set-Top Box for reception of audio/video streams over IP. The prior art receiver device **10** comprises a manifest file retriever **101,** an Adaptive Bit rate Streaming (ABS) ABS demux **102,** a play pump **103,** a decoder/renderer **104,** and a CA library **105.** Elements not shown comprise a generic processing resource, memory, smart card interface, remote control interface, front display etc.. External to STB **10** are an ABS server **100** and a CA system server **106.** Manifest file retriever **101,** ABS demultiplexer **102** and play pump **103** are executed in a non-secure process on the generic processing resource of the STB **10,** as indicated by the broken-line rectangle around these functions. CA library **105** is executed on the generic processing resource in a secure CA process, as indicated by the broken-line rectangle around that function. Decoder/renderer **104** is executed by dedicated decoding/rendering hardware.

The notion of secure process is related to a protection against tampering and hacking with the objective to get access to encryption keys and algorithms. An example of a secure process is a process executed within a Linux container or LXC.

The elements of the prior art adaptive streaming receiver device **10** cooperate as follows to decrypt an adaptive bit rate stream. In the figure, numbers **1)-8)** indicate an order of operations. When STB **10** selects content for reception through streaming, e.g., from a list of multimedia streams presented on a web site and following a user selection, STB **10** retrieves the URL associated with the multimedia stream. This URL comprises a link to a manifest file comprising URLs pointing to multimedia chunks of a same live broadcast or VoD content for different reception profiles. The ABS demux **102** transmits **(1)** a command comprising the URL to the manifest file retriever **101** to fetch the manifest file from the ABS server **100,** and retrieves **(2)** the manifest file from manifest file retriever **101.** According to reception conditions determined by receiver device **10,** ABS demux **102** chooses a reception profile adapted to the current reception conditions, and accordingly selects from the manifest file an URL comprising a link to a multimedia chunk for the chosen profile, fetches and retrieves **(3)** an encrypted chunk plus a key path (an URL for retrieving a key for decrypting the encrypted chunk) from ABS server **100.** ABS demux **102** then transmits the fetched chunk **(4a)** and the key path **(4b)** to play pump **103.** Play pump **103** transmits **(5)** the encrypted chunk plus the key path to the CA library **105.** The CA library, being executed in a secure execution environment, retrieves the decryption key for decrypting the chunk from CA system server **106,** decrypts the chunk using the retrieved decryption key, and transfers **(6)** the decrypted chunk to the play pump **103.** Play pump **103** sends **(7)** the decrypted chunk to decoder/renderer **104.** The decrypted chunk corresponds to a chunk of encoded multimedia data that needs to be decoded. Therefore the decrypted chunk is transmitted to the decoder/renderer **104** which decodes the chunk and outputs **(8)** a corresponding audio/video signal to the High Definition Multimedia Interface (HDMI) of STB **10** that is connected to an audio/video rendering device such as a digital TV set (not shown). It can thus be observed that for security reasons CA library **105** is responsible for decrypting encrypted chunks, and that this task is executed on a generic processing resource, as are also manifest file retriever **101,** ABS demux **102,** and play pump **103.**

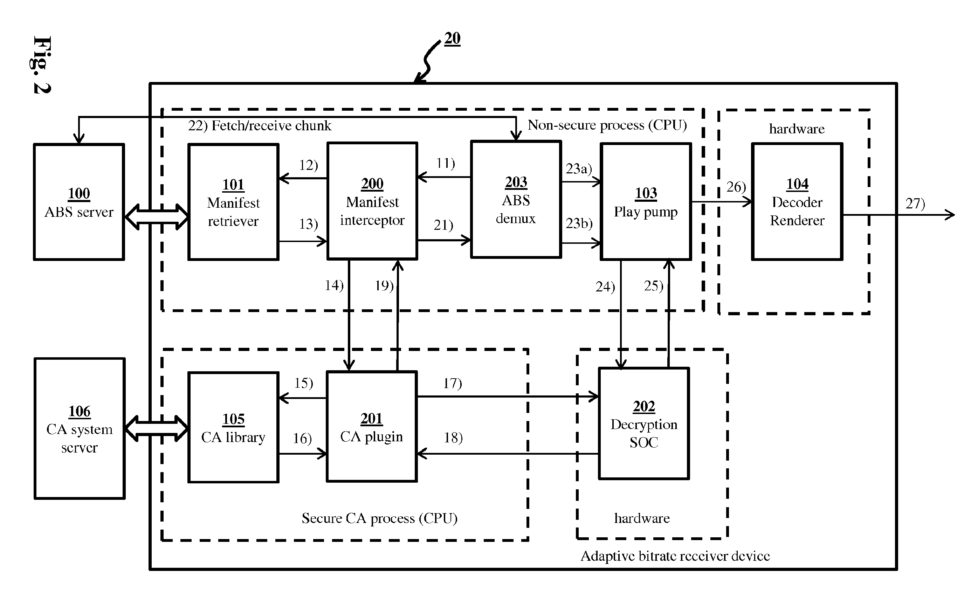

**Figure 2** is an embodiment of an adaptive bit rate streaming receiver device **20** according to the present principles. In addition to the elements of figure 1, the receiver device **20** comprises a manifest file interceptor **200,** a CA plugin **201,** and a hardware decryption System On Chip (SOC) **202** and ABS demux **203** that replaces ABS demux **102.** A request **(11)** for a manifest file from ABS demux **102** is received by manifest file interceptor **200.** The latter forwards **(12)** the request to the manifest retriever **101.** The manifest retriever **101** communicates with ABS server **100** for requesting and receiving the manifest file, which, when received, is transmitted **(13)** by manifest retriever **101** to manifest interceptor **200.** The manifest interceptor transmits **(14)** the manifest file to CA plugin **201.** CA plugin **201** extracts from the manifest file the key paths for finding the decryption keys needed for decrypting the chunks listed in the manifest file, and transmits **(15)** only the key paths to CA library **105.** CA library **105** communicates with CA system server **106** to retrieve the decryption keys, which are transmitted **(16)** by CA library **105** to CA plugin **201.** CA plugin **201** transfers **(17)** the decryption keys to decryption SOC **202.** Decryption SOC **202** creates a hardware decryption key for each of the decryption keys and returns **(18)** for each hardware decryption key a handle to the key to CA plugin **201.** CA plugin **201** replaces the key paths in the manifest file by their corresponding handles to their corresponding hardware decryption keys and transmits **(19)** the modified manifest file to manifest file interceptor **200,** which in turn transfers **(21)** the modified manifest file to ABS demux **203.** ABS demux **203** fetches and receives **(22)** the chunks in the manifest file according to the chosen reception profile and transmits the chunks **(23a)** and the corresponding handles to the hardware decryption keys **(23b)** to play pump **103.** Play pump **103** transmits **(24)** chunks with corresponding hardware decryption handles to decryption SOC **202.** Using the corresponding hardware decryption handles, decryption SOC **202** decrypts the chunks and transmits **(25)** decrypted chunks to play pump **103,** which in turn transmits **(26)** the decrypted chunks to decoder/renderer **104.** The latter decodes the chunk and creates an audio/video signal for transmission (27) to an audio/video rendering device.

It can thus be observed that in the adaptive bit rate receiver device **20,** keys are only transmitted in a context of the secure CA process. The secure CA process only transmits handles to hardware decryption keys to the non-secure process, also referred to as "process for retrieving encrypted audio/video content" herein or "process" in short. Hardware decryption keys remain stored in the decryption SOC **202** which is a secured environment; it is impossible to obtain a decryption key from SOC **202.** SOC **202** performs the decryption of chunks with keys stored in SOC **202** and does not allow any other operations. Using the described architecture, secure hardware decryption is thus enabled.

According to a variant embodiment, the manifest file interceptor **200,** instead of transmitting **(14)** the manifest file to CA plugin **201,** extracts the key paths from the manifest file and transfers **(14)** only the extracted key paths to the CA plugin **201.** The CA plugin **201** transmits the key paths to CA library 105. CA library **105** communicates with CA system server **106** to retrieve the decryption keys, which are transmitted **(16)** by CA library **105** to CA plugin **201.** CA plugin **201** transfers **(17)** the decryption keys to decryption SOC **202.** Decryption SOC **202** creates a hardware decryption key for each of the decryption keys and returns **(18)** for each hardware decryption key a handle to the key to CA plugin **201.** The CA plugin **201** returns a list of handles to corresponding hardware decryption keys to the manifest file interceptor **200.** The manifest file interceptor replaces the key paths in the manifest file by the corresponding hardware decryption key handles and transfers **(21)** the modified manifest file to ABS demux **203.** Thus, according to this embodiment, manifest files are advantageously not handled in the context of the CA process, which enables the CA process to remain independent from any modifications to manifest file syntax.

According to a variant embodiment, the manifest interceptor **200** is comprised in the manifest retriever **101.**

According to a variant embodiment, the manifest interceptor **200** is comprised in the ABS demux **203.**

According to a variant embodiment, the decryption of encrypted chunks is done before injection of chunks in play pump **103,** for example using DMA (Direct Memory Access), which is advantageous as it relieves the generic processing resource (e.g., CPU) from being occupied with related memory read-write transfers.

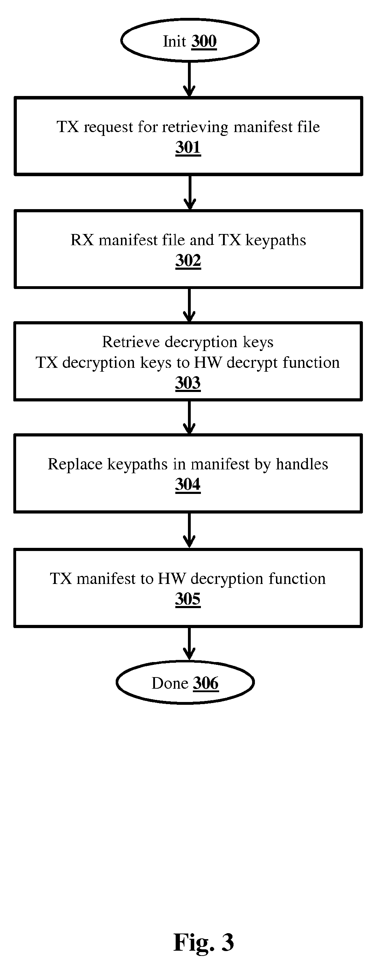

**Figure 3** is a flow chart according to a particular embodiment of a method according to the present principles. The method is for example implemented by device **20** of figure 2. In a first initialization step **300,** variables and memory zones used for the execution of the method are initialized. In a step **301,** a request for retrieving a manifest file is transmitted (e.g., see figure 2, reference **12**)**.** The manifest file comprises a list of encrypted audio/video chunks and associated key paths for retrieving decryption keys for decrypting the encrypted audio/video chunks. In a step **302,** the manifest file is received, (e.g., fig. 2, reference **13**). Subsequently, the associated key paths are transmitted to a secure control access process (e.g., fig.2, reference **14**). In a step **303,** the secure control access process retrieves (e.g., fig.2 references **15** and **16**) decryption keys corresponding to the associated key paths from a distant server, and transmits (e.g., fig.2 reference **17**) the decryption keys to a hardware decryption function that stores the retrieved decryption keys and that returns (e.g., fig. 2 reference **18**) corresponding handles to the stored decryption keys for hardware decryption of the encrypted audio/video chunks. In a step **304,** the associated key paths are replaced in the manifest file by the corresponding handles (e.g., fig.2 reference **19**). In a step **305,** the manifest file is transferred (e.g., fig. 2 references **21, 23a, 23b, 24**) to the hardware decryption function. The hardware decryption function decrypts the encrypted audio/video chunks based on the decryption keys stored by the hardware decryption function and retrieved by the hardware decryption function based on the corresponding handles. In step **306,** the method is done.

As will be appreciated by one skilled in the art, some elements in the drawings may not be used or be necessary in all embodiments. Some operations may be executed in parallel. Variant embodiments other than those illustrated and/or described are possible.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing, as is readily appreciated by one of ordinary skill in the art: a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. A method for decryption of an adaptive bit rate audio/video stream, the method being implemented by a receiver device and comprising:
transmitting (12) a request for retrieving a manifest file, the manifest file comprising a list of encrypted audio/video chunks and associated key paths for retrieving decryption keys for decrypting said encrypted audio/video chunks;
receiving (13) the manifest file, and transmitting (14) said associated key paths to a secure control access process;
said secure control access process retrieving (15,16) decryption keys corresponding to said associated key paths from a distant server, transmitting (17) said decryption keys to a hardware decryption function that stores said retrieved decryption keys and that returns (18) corresponding handles to said stored decryption keys for hardware decryption of said encrypted audio/video chunks;
replacing (19) said associated key paths in said manifest file by said corresponding handles;
transferring (21, 23a, 23b, 24) said manifest file to said hardware decryption function, said hardware decryption function decrypting said encrypted audio/video chunks based on said decryption keys stored by said hardware decryption function and retrieved by said hardware decryption function based on said corresponding handles.

2. The method according to claim 1, comprising:
a transmission of said manifest file to said secure access process;
retrieving said manifest file from said secure access process wherein said associated key paths are replaced by said corresponding handles to said hardware decryption keys.

3. A device for decrypting adaptive bit rate streams, the device comprising:
a manifest interceptor (200), configured to transmit (12) a request for retrieving a manifest file, the manifest file comprising a list of encrypted audio/video chunks and associated key paths for retrieving decryption keys for decrypting said encrypted audio/video chunks;
said manifest file interceptor being further configured to receive (13) the manifest file, and to transmit (14) said associated key paths to a control access plugin (201);
said control access plugin (201) being further configured to retrieve (15,16) decryption keys corresponding to said associated key paths from a distant server, to transmit (17) said decryption keys to a hardware decryption function (202) that stores said retrieved decryption keys and that returns (18) corresponding handles to said stored decryption keys for hardware decryption of said encrypted audio/video chunks;
said manifest interceptor being further configured to replace (19) said associated key paths in said manifest file by said corresponding handles;
a demultiplexer (203) and a play pump (103) configured to transfer (21, 23a, 23b, 24) said manifest file to said hardware decryption function, said hardware decryption function being further configured to decrypt said encrypted audio/video chunks based on said decryption keys stored by said hardware decryption function and retrieved by said hardware decryption function based on said corresponding handles.

4. The device according to claim 3, wherein the manifest interceptor is comprised in a manifest retriever (101).

5. The device according to claim 3 or 4, wherein the manifest interceptor is comprised in said demultiplexer.

6. The device according to any of claims 3 to 5, wherein the decryption function is configured to store said decrypted audio/video chunks in direct access memory for retrieval by said play pump.
